(19) Europäisches Patentamt

European Patent Office

Office européen des brevets

(11) Veröffentlichungsnummer: **0 213 078**
**A2**

(12) **EUROPÄISCHE PATENTANMELDUNG**

(21) Anmeldenummer: **86810361.5**

(51) Int. Cl.⁴: **G03B 19/00**

(22) Anmeldetag: **14.08.86**

(30) Priorität: **14.08.85 CH 3487/85**

(43) Veröffentlichungstag der Anmeldung:
**04.03.87 Patentblatt 87/10**

(84) Benannte Vertragsstaaten:
**BE CH DE FR GB IT LI NL SE**

(71) Anmelder: **Vogt, Phillppe**
**Frohalpstrasse 65**
**CH-8038 Zürich(CH)**

(72) Erfinder: **Vogt, Phillppe**
**Frohalpstrasse 65**
**CH-8038 Zürich(CH)**

(74) Vertreter: **Häfner, Walter, Dipl.-Ing.**
**Hildanusstrasse 3**
**CH-3013 Bern(CH)**

(54) **Fachkamera.**

(57) Die Fachkamera enthält einen Bild-bzw. Objektivrahmen (2) mit einer Haltevorrichtung, die in sich mindestens um zwei einander rechtwinklig - schneidende Schwenkachsen (3,4) schwenkbar ist. Mindestens eine Haltevorrichtung ist zudem um eine dritte Schwenkachse (5) schwenkbar. Die die Schwenkachsen (3,4,5) bestimmenden Einrichtungen (6,7,8) sind so angeordnet, dass zwischen zwei horizontalen Schwenkachsen (4,5) eine vertikale Schwenkachse (3) liegt.

Mit dieser erfindungsgemässen Anordnung kann die Torkelbewegung des Bild-oder Objektivrahmens bei der indirekten Querverschiebung, wenn zugleich die Perspektive oder Schärfendehnung mit der Schwenkung um die zweite Schwenkachse verändert werden muss, vermieden werden.

Fig. 2

EP 0 213 078 A2

## Fachkamera

Die vorliegende Erfindung betrifft eine Fachkamera mit je einem Bild-und Objektivrahmen mit je einer Haltevorrichtung, die in sich um mindestens zwei einander rechtwinklig kreuzende Schwenkachsen bezüglich einer Kamerabasis schwenkbar ist, wofür eine erste Einrichtung, die eine erste Schwenkachse so bestimmt, dass diese durch die Bildebene bzw. die Hauptebene des Objektivs verläuft, und die eine Schwenkvorrichtung mit einer Betätigungseinrichtung zum Schwenken des Bild-bzw. Objektivrahmens aufweist, oberhalb einer zweiten Einrichtung angeordnet ist, die eine zweite Schwenkachse so bestimmt, dass diese quer zur Kamerabasis und zur ersten Schwenkachse verläuft, und die mittels einer Fokusiereinrichtung mit einer Betätigungseinrichtung auf der Kamerabasis verstellbar montiert ist.

Derartige Kameras, mit denen zwei oder drei in verschiedenen Entfernungen von der Kamera liegende Objektpunkte gleichzeitig scharf abgebildet und/oder perspektivische Verzerrungen ausgeglichen werden können, sind bekannt.

Die Verschwenkung des Bild-oder Objektivrahmens kann mit einer Anordnung erfolgen, bei der eine vertikale Schwenkachse entweder unterhalb oder oberhalb einer horizontalen Schwenkachse liegt. Liegt die vertikale Schwenkachse unterhalb der horizontalen. Schwenkachse, so hat dies eine soge nannte Torkelbewegung zur Folge, wenn eine Schwenkung zuerst um die horizontale Schwenkachse und dann um die vertikale Schwenkachse ausgeführt wird. Um diese Torkelbewegung zu vermeiden, muss bei der Anordnung in bekannter Weise die senkrechte Schwenkachse oberhalb der horizontalen Schwenkachse liegen, und es muss in bekannter Weise zuerst die Schwenkung um die horizontale Schwenkachse und dann die Schwenkung um die vertikale Schwenkachse vorgenommen werden.

Die einzuhaltende Reihenfolge hat den Nachteil, dass die zuerst auszuführende Schwenkung um die horizontale Schwenkachse für die Schärfendehnung des vertikal zur Kamerabasis abzubildenden Raumes gültig ist, aber nicht identisch mit der schräg zur Kamera abzubildenden Ebene im Raum sein muss.

Die der Erfindung zugrundeliegende Aufgabe besteht darin, den angegebenen Nachteil zu beheben und eine Fachkamera der eingangs genannten Art zu schaffen, bei der durch die Kombination einer vertikalen Schwenkachse zwischen zwei horizontalen Schwenkachsen eine Verschwenkung des Bild-bzw. Objektivrahmens ohne die Torkelbewegung möglich ist.

Diese Aufgabe wird erfindungsgemäss mit den kennzeichnenden Merkmalen des Patentanspruches 1 gelöst.

Mit dieser erfindungsgemässen Anordnung kann die Torkelbewegung des Bild-oder Objektivrahmens bei der indirekten Querverschiebung, wenn zugleich die Perspektive oder Schärfendehnung mit der Schwenkung um die zweite Schwenkachse verändert werden muss, beseitigt werden. Hierbei ist zu beachten, dass die Reihenfolge der Schwenkungen ausgehend von der Einrichtung erfolgen muss, die die der Kamerabasis am nächsten liegende Schwenkachse bestimmt.

Bei einer Ausführungsform der Erfindung ist die Haltevorrichtung für den Objektivrahmen mit der dritten Einrichtung versehen.

Im folgenden wird die Erfindung anhand der beiliegenden Zeichnungen erläutert.

Es zeigen:

Fig. 1 eine teilweise aufgebrochen dargestellte Ansicht eines Ausführungsbeispiels einer Haltevorrichtung für die erfindungsgemässe Fachkamera,

Fig. 2 eine Ansicht eines anderen Ausführungsbeispiels der Haltevorrichtung für die erfindungsgemässe Fach kamera,

Fig. 3 eine Ansicht in Richtung "A" in Fig. 1,

Fig. 4 einen Schnitt durch die erste Einrichtung,

und Fig. 5 einen Schnitt durch eine Betätigungseinrichtung.

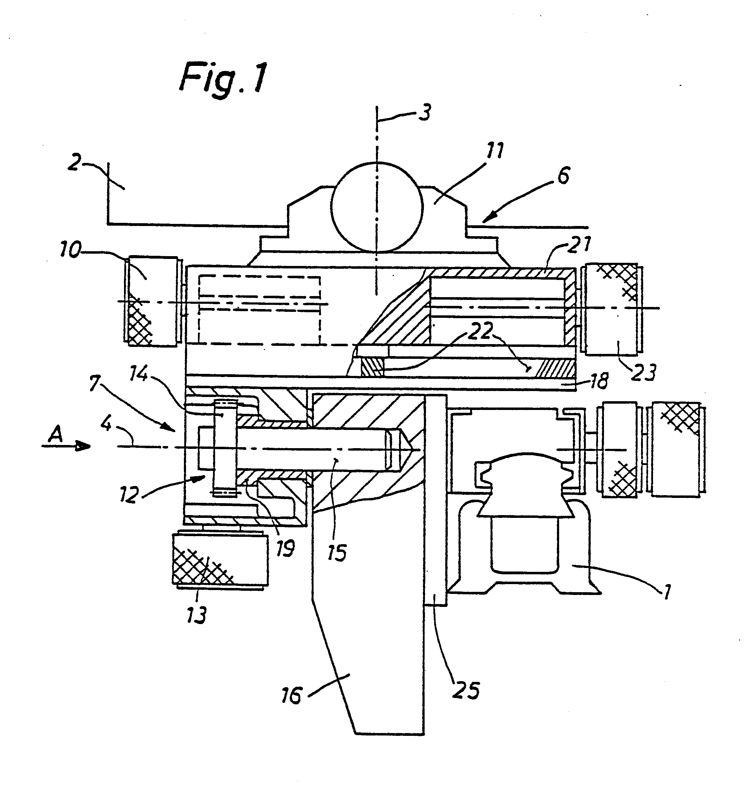

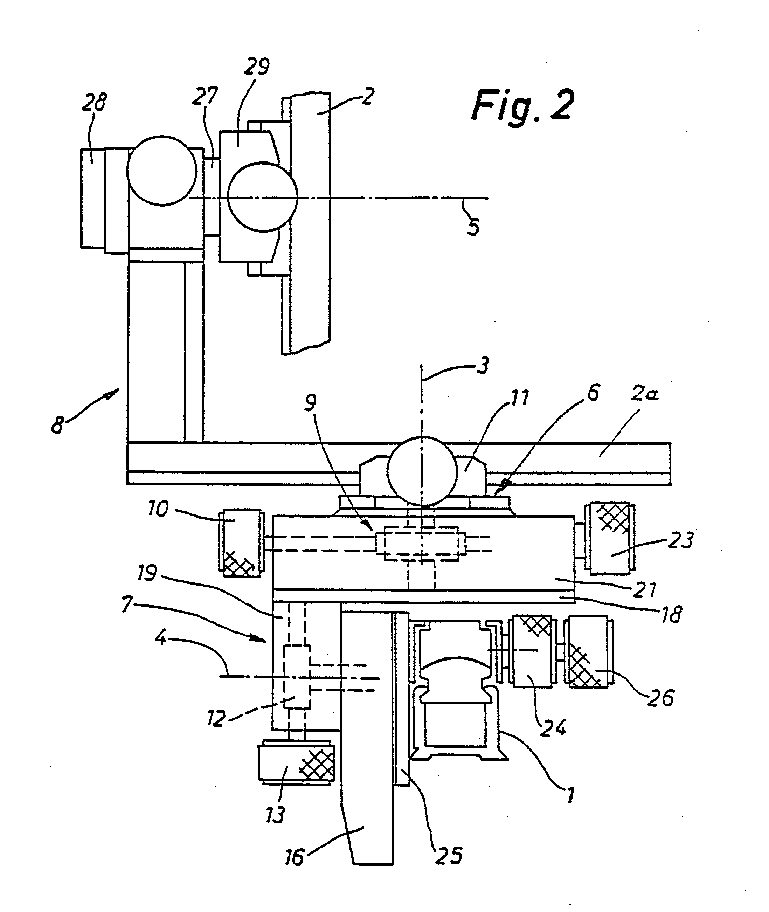

Die Figuren 1 und 2 zeigen zwei Ausführungsbeispiele von Haltevorrichtungen, die auf einer Kamerabasis 1 verstellbar montiert sind, und an denen der Bild-bzw. Objektivrahmen 2 lösbar befestigt ist. Mit der Haltevorrichtung gemäss Fig. 1 ist der Bild-bzw. Objektivrahmen 2 durch die an sich bekannte Basisschwenkung um zwei einander rechtwinklig schneidende Schwenkachsen 3,4 bezüglich der Kamerabasis 1 - schwenkbar, wobei die erste Schwenkachse 3 vertikal durch die oder parallel der Bildebene bzw. Hauptebene des Objektivs verläuft und die zweite Schwenkachse 4 nahe der Kamerabasis 1 und quer zu dieser und zur ersten Schwenkachse 3 verläuft. Mit der Haltevorrichtung gemäss Fig. 2 ist der Bild-bzw. Objektivrahmen 2 durch eine Kombination der an sich bekannten Basis-und Zentralschwenkung neben der vorstehend erwähnten ersten und zweiten Schwenkachse 3,4 noch um eine dritte Schwenkachse 5 bezüglich der Kamerabasis 1 - schwenkbar, wobei die dritte Schwenkachse 5 die erste Schwenkachse 3 rechtwinklig kreuzt und innerhalb des Bild-bzw. Objektivrahmens 2 verläuft.

Wie aus den Figuren 1 und 2 ersichtlich ist, bildet die Haltevorrichtung nach Fig. 1 eine Grundausführung, die bei beiden Ausführungsbeispielen vorgesehen ist. Die in Fig. 1 dargestellte Haltevorrichtung enthält eine erste Einrichtung 6, die die erste Schwenkachse 3 bestimmt, und eine zweite Einrichtung 7, die die zweite Schwenkachse 4 bestimmt. Die erste Einrichtung 6 ist oberhalb der zweiten Einrichtung 7 montiert.

Die in Figur 2 dargestellte Haltevorrichtung enthält ferner eine dritte Einrichtung 8, die die dritte Schwenkachse 5 bestimmt. Die dritte Einrichtung 8.ist an der ersten Einrichtung 6 montiert.

Die erste Einrichtung 6 weist ein Schneckengetriebe 9 mit einer Betätigungseinrichtung 10, einen Halter 11 für den Bild-bzw. Objektivrahmen 2 oder für die dritte Einrichtungs und eine Rastkupplung auf, die zwischen Halter und Schneckengetriebe angeordnet ist, um das auf die Schnecke einwirkende Drehmoment zu begrenzen.

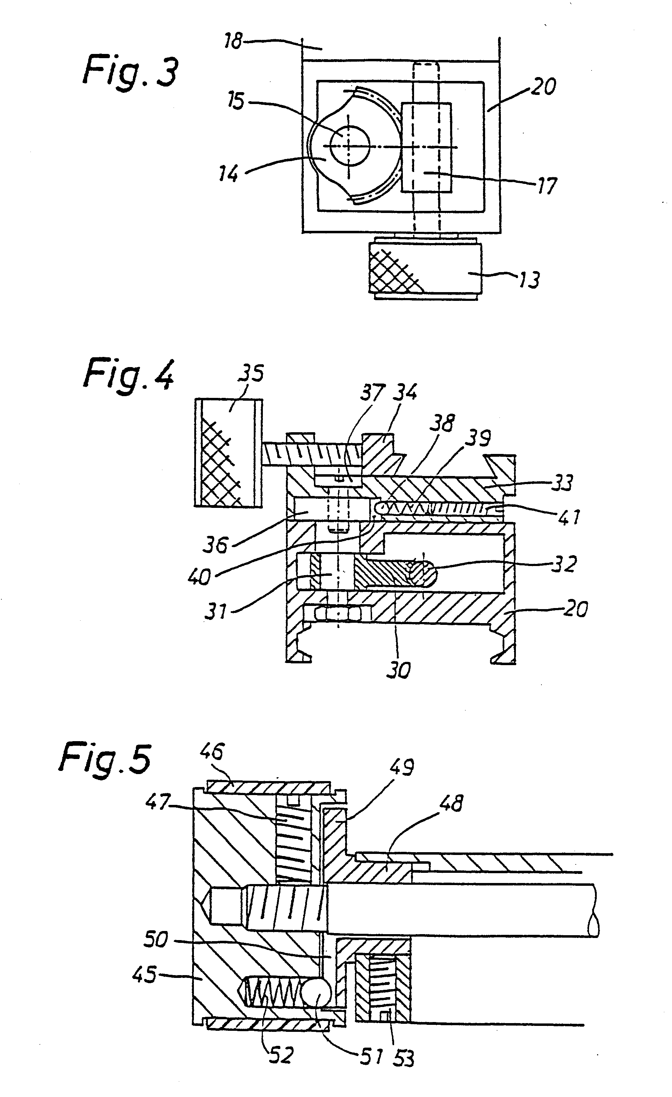

Die zweite Einrichtung 7 enthält ein Schneckengetriebe 12 mit einer Betätigungseinrichtung 13. Das Schneckenrad 14 des Schneckengetriebes ist drehfest auf einer Schneckenradachse 15 montiert, die die zweite Schwenkachse 4 bestimmt und drehfest in einem auf der Kamerabasis 1 verschiebbaren Unterteil 16 montiert ist. Die Schnecke 17 ist in einem Oberteil 18 drehbar montiert und mit der Betätigungseinrichtung 13 verbunden (Fig. 3). Der Oberteil 18 ist mittels eines Lagers 19 auf der Schneckenradachse 15 drehbar gelagert. Der Oberteil 18 enthält ein Gehäuse 20, das das Schneckengetriebe 12 umschliesst und auf der Schneckenradachse 15 drehbar gelagert ist, und eine Verstelleinrichtung 21, die einen Feintrieb 22 mit Betätigungseinrichtung 23 aufweist, und in der die erste Einrichtung 6 montiert ist, um den Bild-bzw. Objektivrahmen 2 quer bezüglich der Kamerabasis 1 zu verstellen. Der Unterteil 16 ist mit einer Fokusiereinrichtung 24 versehen, um die Haltevorrichtung in Längsrichtung der Kamerabasis 1 zu verschieben.

Die Haltevorrichtung kann ferner eine zweite Verstelleinrichtung 25 mit einer Betätigungseinrichtung 26 enthalten, die zwischen dem Unterteil 16 und der Fokusiereinrichtung 24 angeordnet ist, um den Bild-bzw. Objektivrahmen 2 vertikal bezüglich der Kamerabasis 1 zu verstellen.

Wie Figur 2 zeigt, enthält die dritte Einrichtung 8 einen rechtwinkligen Träger 2a, der mit einem Schenkel im Halter 11 der ersten Einrichtung 6 festgeklemmt ist. Am anderen Schenkel ist ein Drehgelenk 27 mit einer Betätigungseinrichtung 28 vorgesehen, das die dritte Schwenkachse 5 bestimmt. Am Drehgelenk 27 ist ein Halter 29 montiert, in dem der Bild-bzw. Objektivrahmen 2 festklemmbar ist.

Die Figur 4 zeigt einen Schnitt durch die in der ersten Verstelleinrichtung 21 montierte erste Einrichtung 6. Wie bereits erwähnt, enthält die erste Einrichtung 6 ein Schneckengetriebe, dessen Schneckenrad 30 auf einer Schneckenradachse 31 drehfest montiert ist, und dessen Schnecke 32 mit der Betätigungseinrichtung 10 verbunden ist. Das Schneckenrad 30 und die Schnecke 32 sind in der ersten Verstelleinrichtung gelagert. Der Halter 11 enthält eine Platte 33, die auf der Schneckenradachse 31 montiert ist, einen Klemmteil 34 mit einer Schraube 35 zum Festklemmen des Bild-bzw. Objektivrahmens 2 oder der dritten Einrichtung 8. Die Schneckenradachse 31 hat einen Bund 36, auf dem die Platte 33 angeordnet ist. Die Platte 33 ist mittels einer Schraube 37 an der Schneckenradachse 31 befestigt. Wie bereits erwähnt, enthält die erste Einrichtung 6 eine Rastkupplung. Wie Figur 4 zeigt, umfasst die Rastkupplung eine Kugel 38, eine Feder 39, die die Kugel in eine V-för mige Ausnehmung 40 im Bund 36 der Schneckenradachse 31 drückt, und eine Schraube 41, mit der die auf die Kugel 38 einwirkende Druckkraft einstellbar ist.

Aus der vorstehenden Beschreibung geht hervor, dass die Haltevorrichtung mehrere Betätigungseinrichtungen aufweist, die sich in zwei Gruppen unterteilen lassen, und zwar eine erste Gruppe von Betätigungseinrichtungen 23, 24 und 26, die eine Verschiebung, d.h. eine Querverschiebung, eine Fokussierung und eine Höhenverstellung bewirken, und in eine zweite Gruppe von Betätigungseinrichtungen 10, 13 und 28, die eine Schwenkung bewirken. Wie aus den Figuren 1 und 2 ersichtlich ist, sind die Haltevorrichtungen so ausgebildet, dass die Betätigungseinrichtungen der ersten Gruppe bezüglich der Kamerabasis 1 auf der einen Seite liegen und die Betätigungseinrichtungen der zweiten Gruppe auf der anderen Seite der Kamerabasis 1 liegen. Mit dieser Anordnung wird das Einstellen an einer Fachkamera vereinfacht.

Um das Einstellen weiter zu vereinfachen, sind die Betätigungseinrichtungen 10, 13 und 28 der zweiten Gruppe mit einer Rasteinrichtung versehen. Die Figur 5 zeigt eine derartige Betätigungseinrichtung. Die Betätigungseinrichtung enthält einen Drehknopf 45, der mit einem Griffbelag 46 am Umfang versehen ist. Der Drehknopf 45 ist mit der Schneckenwelle 17 oder 32 oder mit einem Ansatz des Drehgelenkes 27 verschraubt und durch eine Stiftschraube 47 gesichert. Die Rasteinrichtung besteht aus einer Buchse 48 mit einem Flansch 49, der an der Oberseite eine Ausnehmung 50 aufweist, einer Kugel 51, die im Drehknopf 45 beweglich angeordnet ist, und einer Druckfeder 52, die im Drehknopf 45 angeordnet ist und die Kugel 51 gegen den Flansch 49 drückt. Die Buchse 48 ist jeweils durch eine Stiftschraube 53 gehalten. Bei der Drehung der Betätigungseinrichtung wird somit einmal pro Umdrehung die Kugel 51 durch die Feder 52 in die Ausnehmung 50 gedrückt. Bei solcher Ausbildung der jeweils betätigten Einrichtung wird durch diese Rasteinrichtung bei jedem Einrasten der Kugel 51 in die Ausnehmung 50 eine Information über den Winkel abgegeben, um den die betreffende Einrichtung verschwenkt worden ist.

Anstelle der Betätigungseinrichtungen oder zusätzlich hierzu können auch Antriebsmotore vorgesehen werden, die von einer elektrischen Einrichtung gesteuert werden.

Ferner wird darauf hingewiesen, dass im Rahmen der Erfindung in der ersten und zweiten Einrichtung anstelle der Schneckengetriebe auch Festklemmbare Drehgelenke verwendet werden können.

## Ansprüche

1. Fachkamera mit je einem Bild-und Objektivrahmen, wobei der Bild-und Objektivrahmen je eine Haltevorrichtung aufweist, die in sich um mindestens zwei einander rechtwinklig kreuzende Schwenkachsen bezüglich einer Kamerabasis - schwenkbar ist und hierfür mindestens eine erste und eine zweite Einrichtung enthält, wobei die erste Einrichtung, die eine erste Schwenkachse so bestimmt, dass diese vertikal durch die oder parallel der Bildebene bzw. Hauptebene des Objektivs verläuft, und die eine Schwenkvorrichtung mit einer Betätigungseinrichtung zum Schwenken des Bild- bzw. Objektivrahmens aufweist, oberhalb der zweiten Einrichtung angeordnet ist, die eine zweite Schwenkachse so bestimmt, dass diese quer zur Kamerabasis und zur ersten Schwenkachse verläuft, und die mittels einer Fokusiereinrichtung mit einer Betätigungseinrichtung auf der Kamerabasis verstellbar montiert ist, dadurch gekennzeichnet, dass die zweite Schwenkachse (4) nahe bei der Kamerabasis (1) und rechtwinklig zu dieser liegt, und dass mindestens eine Haltevorrichtung eine dritte Einrichtung (8) aufweist, die oberhalb der ersten Einrichtung (6) montiert ist und eine dritte Schwenkachse (5) so bestimmt, dass diese die erste Schwenkachse (3) rechtwinklig kreuzend durch die oder parallel der Bildebene oder Hauptebene des Objektivs verläuft.

2. Fachkamera nach Anspruch 1, dadurch gekennzeichnet, dass die erste Einrichtung (6) ferner einen Halter (11) für die dritte Einrichtung (8) oder den Bild-bzw. Objektivrahmen (2) und eine Rastkupplung (38-41) aufweist, die zwischen einem als Schwenkvorrichtung dienenden Schneckengetriebe (31, 32) und dem Halter (11) vorgesehen ist, um das auf das Schneckengetriebe einwirkende Drehmoment zu begrenzen.

3. Fachkamera nach Anspruch 2, dadurch gekennzeichnet, dass die Rastkupplung (38-41) eine federbelastete Kugel (38) ist, die mit einem in der Schneckenradachse (31) ausgebildeten Einschnitt - (40) in Eingriff steht.

4. Fachkamera nach Anspruch 1, dadurch gekennzeichnet, dass die zweite Einrichtung (7) ein als Schwenkvorrichtung dienendes Schneckengetriebe (12) mit einer Betätigungseinrichtung (13) aufweist, wobei die Schneckenradachse (15) die zweite Schwenkachse (4) bestimmt und drehfest in einem auf der Kamerabasis (1) verschiebbaren Unterteil (16) montiert ist, und wobei die Schnecke (17) in einem Oberteil (18) montiert ist, der auf der Schneckenradachse (15) drehbar angeordnet ist und der die erste Einrichtung (6) enthält.

5. Fachkamera nach Anspruch 1 und 2, wobei die dritte Einrichtung (8) einen Träger (2a) für den Bild-oder Objektivträger und ein Drehgelenk (27) mit Betätigungseinrichtung (28) aufweist, das am Träger (2a) montiert ist und die dritte Schwenkachse (5) bestimmt, dadurch gekennzeichnet, dass die dritte Einrichtung (8) ferner einen zweiten Halter (29) aufweist, in dem der Bild-oder Objektivrahmen (2) einsetzbar und festklemmbar ist, und dass der Träger (2a) einen Abschnitt aufweist, der unter Bestimmung der Stellung des Bild-oder Objektivrahmen (2) einsetzbar und festklemmbar ist.

6. Fachkamera nach Anspruch 4, dadurch gekennzeichnet, dass der Unterteil (16) mit der Fokusiereinrichtung (24) versehen ist, um den Bild-oder Objektivrahmen (2) in Längsrichtung der Kamerabasis (1) zu verschieben.

7. Fachkamera nach Anspruch 4, dadurch gekennzeichnet, dass die Schnecke (17) im Oberteil (18) drehbar gelagert ist, und dass die Schnecke - (17) mit der Betätigungseinrichtung (13) verbunden ist.

8. Fachkamera nach Anspruch 1 und 4 mit einer ersten Verstelleinrichtung (21), die einen Feintrieb (22) mit Betätigungseinrichtung (23) aufweist, um den Bild-bzw. Objektivrahmen (2) quer bezüglich der Kamerabasis (1) zu verstellen, dadurch gekennzeichnet, dass die erste Einrichtung (6) in der ersten Verstelleinrichtung (21) montiert ist, und dass die erste Verstelleinrichtung (21) am Oberteil (18) befestigt ist.

9. Fachkamera nach Anspruch 1 und 4 mit einer zweiten Verstelleinrichtung (25), die einen Feintrieb mit Betätigungseinrichtung aufweist, um den Bild-bzw. Objektivrahmen (2) vertikal bezüglich der Kamerabasis (1) zu verstellen, dadurch gekennzeichnet, dass die zweite Verstelleinrichtung (25) zwischen dem Unterteil (16) und der Fokusiereinrichtung (24) angeordnet ist.

10. Fachkamera nach einem der Ansprüche 1, 4 oder 5, dadurch gekennzeichnet, dass die Betätigungseinrichtungen einen Drehknopf (45) und eine Rasteinrichtung (40-52) aufweisten, die dem Drehknopf zugeordnet ist, um eine Information bezüglich der Verstellung durch die betreffende Betätigungseinrichtung anzugeben.

11. Fachkamera nach einem der Ansprüche 1,4,5,8 oder 9. dadurch gekennzeichnet, dass einerseits die eine Schwenkung bewirkenden Betätigungseinrichtungen (10,13,28) und andererseits die eine Verschiebung bewirkenden Betätigungseinrichtungen (23,24,26) auf verschiedenen Seiten einer vertikalen, längs der Kamerabasis (1) verlaufenden Ebene angeordnet sind.

12. Fachkamera nach einem der Ansprüche 1,4,5,8 oder 9, dadurch gekennzeichnet, dass mindestens eine der Betätigungseinrichtungen - (10,13,28) eine Servoeinrichtung mit Betätigung durch eine elektrische Einrichtung ist oder durch eine solche ergänzt ist.

13. Fachkamera nach Anspruch 1, dadurch gekennzeichnet, dass die Haltevorrichtung für den Objektivrahmen die dritte Einrichtung (8) aufweist.

14. Fachkamera nach Anspruch 1, dadurch gekennzeichnet, dass die Haltevorrichtung für den Bildrahmen die dritte Einrichtung (8) aufweist.

## Fig.1

*Fig. 2*

Fig. 3

Fig. 4

Fig. 5